# EUROPÄISCHE PATENTANMELDUNG

(11) **EP 2 447 707 A1**
(43) Veröffentlichungstag der Anmeldung: **02.05.2012**
(21) Anmeldenummer: 11186980.6
(22) Anmeldetag: 27.10.2011
(51) Int. Cl.: G01N 21/85

(54) **Vorrichtung und Verfahren zur Durchführung einer berührungslosen Messung am Inhalt eines Behälters**

(30) Priorität: 29.10.2010 DE 102010043131
(71) Anmelder: Fraunhofer-Gesellschaft zur Förderung der angewandten Forschung e.V., 80686 München (DE)
(72) Erfinder: Grüger, Heinrich, Dr., 01109 Dresden (DE); Knobbe, Jens, 01129 Dresden (DE); Seidl, Kristof, 01309 Dresden (DE)
(74) Vertreter: Schenk, Markus

(57) **Zusammenfassung**

Die vorliegende Erfindung schafft eine Vorrichtung zur Durchführung einer berührungslosen Messung am Inhalt eines Behälters mit einer Einrichtung zum Erzeugen eines Wirbels und einer Einrichtung zur Durchführung einer berührungslosen Messung. Die Einrichtung zum Erzeugen eines Wirbels ist ausgebildet, um durch Einströmen eines Mediums in den Behälter einen Wirbel in dem Inneren des Behälters zu erzeugen. Die Einrichtung zur Durchführung einer berührungslosen Messung ist ausgebildet, um in einem Inneren des Wirbels eine berührungslose Messung durchzuführen, um eine Eigenschaft des Inhalts des Behälters zu ermitteln.

## Beschreibung

Ausführungsbeispiele der vorliegenden Erfindung betreffen ein Konzept zur berührungslosen Messung an einem Inhalt eines Behälters, z. B. zur Überwachung des Inhalts eines Gärbehälters zur Erzeugung von Biogas aus Maissilage und Reststoffen der Tierhaltung.

Bei einer Mehrzahl von Anwendungen im Bereich der Analysetechnik ist es erforderlich, eine Messung am Inhalt des Behälters durchzuführen, um z. B. den Inhalt oder eine Eigenschaft des Inhalts des Behälters zu ermitteln. Für eine solche Messung wäre es denkbar, ein optisches Messverfahren zu verwenden. Dabei könnte eine elektromagnetische Strahlung einer optischen Messeinrichtung an eine vorgegebene Messstelle bzw. Messposition innerhalb des Behälters geleitet bzw. gerührt werden, und eine durch wechselwirkung zwischen der elektromagnetischen Strahlung und dem Inhalt des Behälters (Messobjekt) entstehende bzw. veränderte elektromagnetische Strahlung zurück zu der Messeinrichtung geführt und von der Messeinrichtung erfasst werden. Die entstehende bzw. veränderte elektromagnetische Strahlung würde dabei Informationen über den Inhalt des Behälters enthalten.

Als optisches Meßverfahren könnte absorption-, Reflexion- oder Fluoreszenzmessung verwendet werden. Dabei wäre es möglich, durch die Erfassung optischer Eigenschaften des Inhalts des Behälters, den Inhalt des Behälters oder eine Eigenschaft des Inhalts des Behälters zu ermitteln. Hierzu würde eine chemische Zusammensetzung oder eine biologische Aktivität zählen. Bei vielen Anwendung wäre es denkbar, dass die Eigenschaft des Inhalts des Behälters nicht nur an einer Stelle bzw. Position von Interesse wäre, sondern darüber hinaus auch deren räumliche Verteilung innerhalb des Behälters.

Für die elektromagnetische Strahlung könnte der Inhalt des Behälters eine nur sehr geringe Eindringtiefe aufweisen, wodurch die entstehende bzw. veränderte elektromagnetische Strahlung eine Information aus einer nur sehr dünnen Schicht bzw. geringen Tiefe enthalten würde. Des Weiteren wäre es möglich, der Inhalt des Behälters eine Eigenschaft aufweist, die die Messeinrichtung im Laufe der Zeit beeinträchtigen oder verändern würde, z. B. könnte der Inhalt des Behälters die Messeinrichtung verunreinigen, zersetzen oder verkratzen.

Bei einer Mehrzahl von Anwendungen kann der Inhalt des Behälters aus einer Flüssigkeit bestehen, wie z. B. aus Wasser, Abwasser, Milch, Getränken oder Molkereierzeugnissen. Ferner könnte der Inhalt des Behälters aus einer Mischung aus Flüssigkeiten und Festkörpern bestehen, wie z. B. aus Maische, Gülle oder dem Inhalt von Gärtanks. Des Weiteren wäre es möglich, dass der Inhalt des Behälters aus Festkörpern, wie z. B. aus Getreide, besteht. Darüber hinaus wäre es denkbar, dass der Behälter bzw. der Inhalt des Behälters Gase, wie z. B. Kohlendioxid, Methan, oder Luft, enthält.

Zur Durchführung einer optischen Messung am Inhalt des Behälters könnte im Bereich einer Behälterwand ein optisches Fenster angeordnet werden, durch das die Messung erfolgen würde. Die Eindringtiefe der elektromagnetischen Strahlung in den Inhalt des Behälters (Messobjekt) vor dem Fenster würde dabei die Tiefe bestimmen, aus der die Informationen gewonnen werden. Diese wäre jedoch in der Regel sehr gering. Eine Variabilität bezüglich der Messung würde eine solche Vorrichtungen nicht aufweisen. Falls der Inhalt des Behälters nicht gleichmäßig Durchmischt wäre, könnte es darüber hinaus dazu kommen, dass der Inhalt des Behälters vor dem Fenster nicht repräsentativ für den gesamten Inhalt des Behälters ist. Ferner wäre es denkbar, dass der Inhalt des Behälters eine Veränderung der optischen Eigenschaften des Fensters hervorruft, was zu einer Beeinträchtigung oder Verfälschung der Messergebnisse führen könnte. Beispielsweise wäre es möglich, dass es zu einem Zuwachsen des Fensters kommt.

Eine weitere Möglichkeit besteht darin, eine mechanische Reinigungseinrichtung, wie z. B. ein Wischer, zu verwenden, um die Oberfläche des Fensters von Verunreinigungen freizuhalten. Nachteilhaft wäre der zusätzliche Aufwand einer solchen Reinigungseinrichtung, insbesondere die für die Betätigung notwendige mechanische Durchführung im Inneren des Behälters und die unter Umständen sehr eingeschränkte Wirksamkeit der Reinigungseinrichtung. In ungünstigen Fällen könnte es vorkommen, dass die mechanische Bewegung eine Schädigung des Fensters eher fördern als verhinder würde, insbesondere wenn der Inhalt des Behälters Partikel enthält, die beim Wischen die Oberfläche des Fensters zerkönnen. Vermeiden ließe sich dies durch die Verwendung entsprechend widerstandsfähiger bzw. kratzfester Materialien, wie z. B. Fenster aus Saphir, was jedoch mit sehr hohen Kosten verbunden wäre.

Des Weiteren wäre es denkbar, ein Spülmedium, wie z. B. eine Flüssigkeit oder ein Gas, zu verwenden, um die Oberfläche des Fensters von Verunreinigung frei zu halten. Anwendung würden solche Vorrichtungen z. B. im Bereich der Gasentladung finden. Dabei könnte das Fenster eines Reaktors zur Beschichtung von Bauteilen aktiv mit einem Neutralgas, z. B. mit Argon, gespült werden, um die parasitäre Beschichtung des Fensters zu minimieren und um eine Beobachtung des Beschichtungsvorgangs zu ermöglichen. Für Messobjekte, z. B. Flüssigkeiten, die eine hohe optische Dichte und somit eine für die elektromagnetische Strahlung geringe Eindringtiefe aufweisen, sind derartige Verfahren nicht üblich. Der Grund hierfür ist die geringe Eindringtiefe und der damit verbundene verminderte Informationsgehalt der Messung. Ferner könnte die Auswahl des Spülmediums das Messobjekt bzw. den Inhalt des Behälters beeinflussen.

Zur Erfassung von Messwerten an unterschiedlichen Positionen im Inneren des Behälters wäre es möglich, ein zum Behälterinneren verschiebbares Fenster zu verwenden. Alternativ dazu, könnte die komplette Messeinrichtung zum Behälterinneren verschiebbar sein. Von Nachteil wäre dabei die erforderliche mechanische Verstelleinrichtung, sowie die für die Verstelleinrichtung erforderlichen Abdichtungen. Ein Verschleiß der Abdichtungen würde zu Undichtigkeiten führen, was in der Regel mit aufwendigen Wartungs- und Reparaturarbeiten verbunden wäre. Darüber hinaus könnten die Anforderungen an die Abdichtungen steigen, falls der Inhalt des Behälters gegenüber einer Umgebung des Behälters unter einem hohen Druck stehen würde.

Für manchen Anwendungen könnte es ferner erforderlich sein, den Inhalt des Behälters zu durchmischen. Hierzu wäre eine mechanische Durchmischungseinrichtung, wie z. B. von oben in den Behälter eingeführte Rührer oder Schaufelräder, erforderlich. Bei der gleichzeitigen Verwendung von einer in den Behälter hineinragenden oder verschiebbaren Messeinrichtung und einer Durchmischungseinrichtung müsste sichergestellt werden, dass sich die Messeinrichtung und die Durchmischungseinrichtung nicht gegenseitig beeinträchtigen oder beschädigen.

Der vorliegenden Erfindung liegt somit die Aufgabe zugrunde ein Konzept zu schaffen, das eine zuverlässigere, reproduzierbarere und/oder langzeitstabilere Durchführung einer Messung am Inhalt eines Behälters ermöglicht.

Diese Aufgabe wird durch eine Vorrichtung zur Durchführung einer berührungslosen Messung am Inhalt eines Behälters gemäß Anspruch 1, einem System mit einem Behälter und einer Vorrichtung zur Durchführung einer berührungslosen Messung am Inhalt eines Behälters gemäß Anspruch 16, einem Verfahren zur Durchführung berührungslosen Messung am Inhalt eines Behälters gemäß Anspruch 19 oder durch ein Computerprogramm nach Anspruch 20 gelöst.

Die vorliegende Erfindung schafft eine Vorrichtung zur Durchführung einer berührungslosen Messung am Inhalt eines Behälters mit einer Einrichtung zum Erzeugen eines Wirbels und einer Einrichtung zur Durchführung einer berührungslosen Messung. Die Einrichtung zum Erzeugen eines Wirbels ist ausgebildet, um durch Einströmen eines Mediums in den Behälter einen Wirbel in dem Inneren des Behälters zu erzeugen. Die Einrichtung zur Durchführung einer berührungslosen Messung ist ausgebildet, um in einem Inneren des Wirbels eine berührungslose Messung durchzuführen, um eine Eigenschaft des Inhalts des Behälters zu ermitteln.

Die Erfindung schafft ferner ein System mit einem Behälter und Vorrichtung zur Durchführung einer berührungslosen Messung, wobei die Vorrichtung zur Durchführung einer berührungslosen Messung eine Einrichtung zum Erzeugen eines Wirbels und eine Einrichtung zur Durchführung einer berührungslosen Messung aufweist.

Darüber hinaus schafft die vorliegende Erfindung ein Verfahren zur Durchführung einer berührungslosen Messung am Inhalt eines Behälters. Dabei wird in dem Inneren des Behälters durch Einströmen eines Mediums ein Wirbel erzeugt. Des Weiteren wird im Inneren des Wirbels eine berührungslose Messung durchgeführt, um eine Eigenschaft des Inhalts des Behälters zu ermitteln.

Des Weiteren schafft die vorliegende Erfindung ein Computerprogramm zur Durchführung der erfindungsgemäßen Verfahren.

Um eine zuverlässige und reproduzierbare Erfassung bzw. Bestimmung einer Eigenschaft des Inhalts des Behälters zu ermöglichen, wird bei Ausführungsbeispielen im Inneren des Behälters durch Einströmen eines Mediums in den Behälter ein Wirbel erzeugt und eine berührungslose Messung im Inneren des Wirbels durchgeführt. Bei manchen Ausführungsbeispielen kann hierzu im Bereich einer Behälterwand ein Fenster angeordnet sein, wobei der Wirbel im Inneren des Behälters mit dem Inneren des Wirbels benachbart zu dem Fenster erzeugt werden kann. Die Einrichtung zur Durchführung einer berührungslosen Messung kann dabei auf der anderen Seite des Fensters angeordnet sein und ausgebildet sein, um eine berührungslose Messung im Inneren des Wirbels durch das Fenster hindurch durchzuführen. Die berührungslose Messung kann dabei unter Verwendung einer elektromagnetischen Strahlung erfolgen, wobei vom Inneren des Wirbels eine elektromagnetische Strahlung, die vom Inhalt des Behälters abhängig ist, zurückgeworfen wird. Durch Erfassen und Auswerten der vom Inneren des Wirbels zurückgeworfenen elektromagnetischen Strahlung kann eine Eigenschaft des Inhalts des Behälters ermittelt werden. Durch die Erzeugung eines Wirbels und die Verwendung einer berührungslosen Messung sind keine mechanisch beweglichen Einrichtungen erforderlich, wodurch eine höhere Langzeitstabilität, Zuverlässigkeit sowie ein geringerer Wartungsaufwand realisiert werden kann. Darüber hinaus ist eine schnelle Regelung der Eindringtiefe möglich, wodurch eine schnelle und repräsentative Messung ermöglicht wird.

Ausführungsbeispiele der vorliegenden Erfindung werden nachfolgend unter Bezugnahme auf die beiliegenden Zeichnungen näher erläutert. Es zeigen:
- Fig. 1: eine schematische Ansicht eines Ausführungsbeispiels einer Vorrichtung zur Durchführung einer berührungslosen Messung am Inhalt eines Behälters;
- Fig. 2 a - c: in einer schematischen Ansicht Ausführungsbeispiele der Einrichtung zum Erzeugen eines Wirbels;
- Fig. 3 a-d: in einer schematischen Ansicht Ausführungsbeispiele eines Fensters;
- Fig. 4 a, b: in einer schematischen Ansicht Ausführungsbeispiele eines Wirbels bei einem zusätzlichen Auftrieb des Inhalts des Behälters;
- Fig. 5: eine schematische Ansicht eines Ausführungsbeispiels eines Systems mit einem Behälter und einer Vorrichtung zur Durchführung einer berührungslosen Messung am Inhalt des Behälters.

In der nachfolgenden Beschreibung der Ausführungsbeispiele der Erfindung werden in den Figuren gleiche oder gleichwirkende Elemente mit dem gleichen Bezugszeichen versehen. Eine wiederholte Beschreibung wird vermieden. Vielmehr sollen Erläuterungen aus einer vorhergehenden Figur auch für nachfolgende Figuren gelten, sofern nicht explizit etwas anderes beschrieben wird.

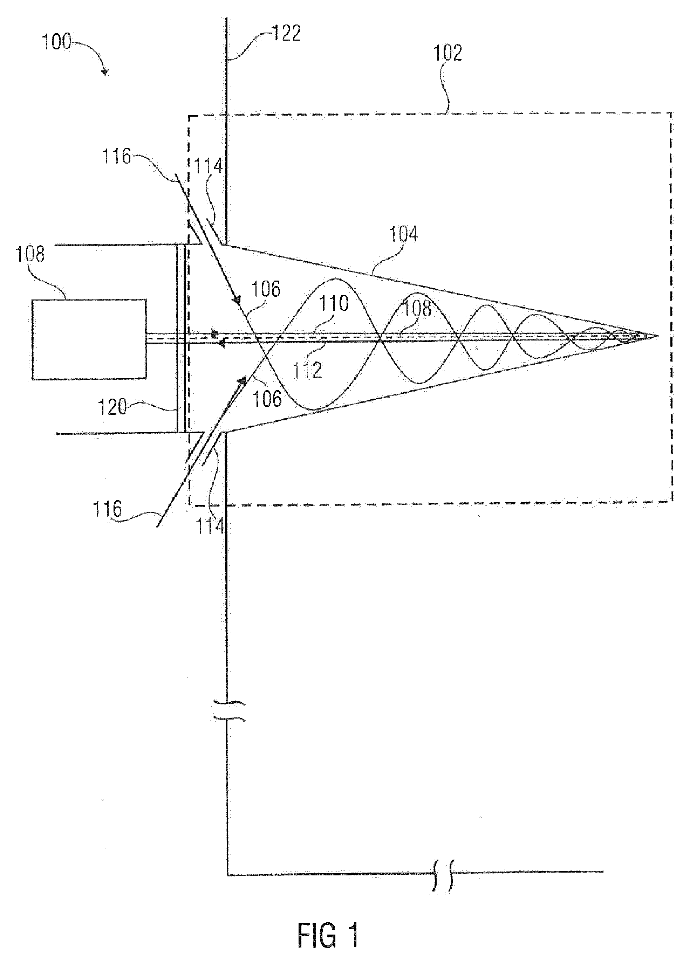

Fig. 1 zeigt eine schematische Ansicht eines Ausführungsbeispiels einer Vorrichtung 100 zur Durchführung einer berührungslosen Messung am Inhalt eines Behälters, Die Vorrichtung 100 weist eine Einrichtung 102 zum Erzeugen eines Wirbels 104 auf, die ausgebildet ist, um durch Einströmen eines Mediums 106 in den Behälter in dem Inneren des Behälters einen Wirbel 104 zu erzeugen. Die Einrichtung 102 zum Erzeugen des Wirbels 104 kann dabei ausgebildet sein, um das Medium 106, z. B. eine Flüssigkeit oder ein Gas, derart in den Behälter einzuströmen, dass sich eine Kreisströmung mit einem so hohen Geschwindigkeitsgradienten bildet, dass ein Wirbel 104 entsteht. Dabei kann das Innere des Wirbels 104 z. B. das in den Behälter eingeströmte Medium 106 aufweisen, während sich benachbart zu dem Inneren des Wirbels 104 der Inhalt des Behälters befinden kann.

Die Vorrichtung 100 zur Durchführung einer berührungslosen Messung am Inhalt eines Behälters weist ferner eine Einrichtung 108 zur Durchführung einer berührungslosen Messung auf, die ausgebildet ist, um in einem Inneren des Wirbels 104 eine berührungslose Messung durchzuführen, um eine Eigenschaft des Inhalts des Behälters zu ermitteln. Bei einem bevorzugten Ausführungsbeispiel beeinträchtigt das in den Behälter eingeströmte Medium 106 die Messung nicht, d. h. es ist für die berührungslose Messung bzw. das hierfür verwendete Messsignal transparent. Das Messsignal kann dabei z. B. Elektromagnetische Strahlung, Schall oder dergleichen sein, wie nachfolgend beschrieben wird. Bei Ausfühnmgsbeispielen erfolgt die Messung somit nicht am Medium 106 im Inneren des Wirbels 104, sondern nahezu ausschließlich an einer definierten bzw. vorgegebenen Messstelle am Inhalt des Behälters benachbart zu dem Inneren des Wirbels 104. Die Messstelle kann dabei durch einen Messweg 118 der Einrichtung zur Durchführung einer berührungslosen Messung gekennzeichnet sein und eine Zone bzw. ein Gebiet des Inhalts des Behälters benachbart zu dem Inneren des Wirbels 104 sein, an dem die Messung erfolgt.

Zur Durchführung einer berührungslosen Messung am Inhalt des Behälters, kann die Einrichtung 108 eine elektromagnetische Strahlung 110 und auf das Innere des Wirbels 104 richten, um eine von dem Inneren des Wirbels 104 bzw. vom Inhalt des Behälters benachbart zum Inneren des Wirbels 104 zurückgeworfene elektromagnetische Strahlung 112 zu erfassen, wobei die erfasste elektromagnetische Strahlung von einer Eigenschaft des Inhalts des Behälters abhängig ist.

Die Einrichtung 108 zur Durchführung einer berührungslosen Messung kann hierzu z. B. einen Laser aufweisen, der ausgebildet ist, um die elektromagnetische Strahlung 110 zu erzeugen und auf das Innere des Wirbels 104, z. B. in Form eines Laserstrahls, zu richten. Falls das in den Behälter eingeströmte Medium ein Gas mit einer hohen Transparenz ist, wie z. B. Luft, dann kann der Laserstrahl 110 entlang eines Messwegs 118 das Innere des Wirbels nahezu ungehindert bis zu der vorgegebenen bzw. definierten Messstelle durchlaufen. Die Messstelle kann dabei eine vorgegebene Zone bzw. ein vorgegebenen Gebiet des Inhalts des Behälters benachbart zu dem Inneren des Wirbels 104 sein, wobei die Position der Messtelle z. B. durch den Messweg 118 vorgegeben ist. Die Größe bzw. Fläche der Messstelle kann dabei durch den Durchmesser des Laserstrahls 110, der auf die Messstelle trifft, gekennzeichnet sein.

Die auf die Messstelle treffende elektromagnetische Strahlung 110 kann von dem Inhalt des Behälters zum Teil absorbiert werden, wodurch nur ein nicht absorbierter Teil der eintreffenden elektromagnetischen Strahlung 110 reflektiert wird. Die durch Reflektion zurückgeworfene elektromagnetische Strahlung 112 kann somit Informationen über den Inhalt des Behälters aufweisen. Darüber hinaus kann die auf die Messstelle treffende elektromagnetische Strahlung 110 Atome und/oder Moleküle des Inhalts des Behälters anregen. Nach einer kurzen Wartezeit fallen die angeregten Atome und/oder Moleküle von einem höheren Energieniveau zurück auf eine niedrigeres Energieniveau wodurch eine vom Inhalt des Behälters abhängige charakteristische elektromagnetische Strahlung 112 emittiert wird. Darüber hinaus kann der Inhalt des Behälters Mikroorganismen aufweisen, die durch die auf das Innere des Wirbels bzw. auf die Messstelle treffende elektromagnetische Strahlung zur Lumineszenz oder Fluoreszenz angeregt werden können.

Die Einrichtung 108 zur Durchführung einer berührungslosen Messung kann somit ausgebildet sein, um eine vom Inneren des Wirbels durch Reflexion, Emission oder Luminesze zurückgeworfene elektromagnetische Strahlung zu erfassen. Hierzu kann die Einrichtung zur Durchführung einer berührungslosen Messung z. B. einen Detektor für elektromagnetische Strahlung aufweisen. Bei Ausführungsbeispielen kann der Detektor für elektromagnetische Strahlung ferner ausgebildet sein, um die zurückgeworfene elektromagnetische Strahlung spektral abzutasten.

Des Weiteren kann die Einrichtung 108 zur Durchführung einer berührungslosen Messung eine Auswerteeinrichtung aufweisen, die ausgebildet ist, um die erfasste elektromagnetische Strahlung hinsichtlich einer vorgegebenen Eigenschaft des Inhalts des Behälters auszuwerten. Die zu ermittelnde Eigenschaft des Inhalts des Behälters kann dabei ein Vorhandensein oder Nichtvorhandensein eines Atoms, Moleküls oder Mikroorganismus im Inhalt des Behälters sein. Darüber hinaus kann die zu ermittelnde Eigenschaft des Inhalts des Behälters auch eine Anzahl bzw. Menge der in dem Behälter vorhandenen Atome, Moleküle oder Mikroorganismen sein. Das Vorhandensein Atoms oder Moleküls in dem Inhalt des Behälters kann durch eine charakteristische Emissionslinie im Spektrum der zurückgeworfenen elektromagnetischen Strahlung ermittelt bzw. erfasst werden. Eine Menge bzw. eine Anzahl eines Atoms oder Moleküls kann dabei über die Amplitude der charakteristischen Emissionslinie im Spektrum bzw. der spektralen Zusammensetzung der erfassten elektromagnetischen Strahlung ermittelt werden.

Bei Ausführungsbeispielen kann die Einrichtung 108 zur Durchführung einer berühmngslosen Messung somit eine Spektroskopieeinrichtung, eine Laserspektroskopieeinrichtung, eine Raman-Spektroskopieeinrichtung, eine kohärente Antistokes-Ramann-Spektroskopieeinrichtung, eine Lumineszenz-Spektroskopieeinrichtung, eine Fluoreszenz-Spektroskopieeinrichtung oder eine Phosphoreszenz-Spektroskopieeinrichtung oder eine Einrichtung zur ortsaufgelösten Spektroskopie sein.

Ferner kann die Einrichtung 102 zum Erzeugen eines Wirbels 104 zumindest eine Einströmöffnung 114 zum Einströmen des Mediums 106 in den Behälter entlang einer Einströmrichtung 116 aufweisen, wobei die Einströmöffnung 114 zu eine Messweg 118, entlang dem die Einrichtung 108 zur Durchführung einer berührungslosen Messung die Messung durchführt, versetzt angeordnet ist. Dabei weist die Einströmrichtung 116 eine erste Komponente entlang einer ersten Richtung auf, die entlang des Messwegs 118 angeordnet ist. Ferner weist die Einströmrichtung 116 eine zweite Komponente entlang einer zweiten Richtung auf, die lotrecht zum Messweg 118 angeordnet ist. Des Weiteren weist die Einströmrichtung 116 eine dritte Komponente entlang einer dritten Richtung auf, die senkrecht zu der ersten und zweiten Komponente angeordnet ist.

Bei einem bevorzugten Ausführungsbeispiel kann die Einströmöffnung 116 der Einrichtung zum Erzeugen eines Wirbels 104 ausgebildet sein, um einen Wirbel zu erzeugen, dessen Inneres benachbart zu der Einrichtung 108 zur Durchführung einer berührungslosen Messung angeordnet ist. Oder in anderen Worten, bezogen auf die Einrichtung 108 zur Durchführung einer berührungslosen Messung kann die Einströmöffnung 114, die das Medium 106 entlang der Einströmrichtung 116 in den Behälter einströmt, derart angeordnet werden, dass ein Wirbel 104 mit dem Inneren des Wirbels 104 benachbart zu der Einrichtung 108 zur Durchführung einer berührungslosen Messung erzeugt wird.

Innerhalb des Wirbels 104 können sich Teilchen, aufgrund der Drehimpulserhaltung, nicht entlang einer Rotationsachse des Wirbels 104 aufhalten, oder in anderen Worten, Teilchen können sich nicht genau am Ort der Rotationsachse des Wirbels 104 aufhalten. Hintergrund ist die Tatsache, dass bei einem Radius r gleich Null (r = 0) der Drehimpuls L, beschrieben durch das Vektorprodukt des Radius r und des Impulses p (L = p x r), nicht von Null verschieden kann, was wiederum im Widerspruch zur Drehimpulserhaltung steht. Folglich können sich keine Teilchen, deren Impuls von Null verschieden ist, im Zentrum entlang der Rotationsachse des Wirbels 104 aufhalten. Erst wenn die eingebrachte Bewegungsenergie des Wirbels 104 durch Reibung an die Umgebung bzw. den Inhalt des Behälters übertragen wurde, ist dies möglich. Bei einem bevorzugten Ausführungsbeispiel ist die Rotationsachse des Wirbels 104 ferner gleich der Messachse bzw. dem Messweg 118, entlang dem die Einrichtung 108 zur Durchführung einer berührungslosen Messung die Messung durchführt.

Die erfindungsgemäße Anordnung der Einrichtung 102 zum Erzeugen eines Wirbels und der Einrichtung 108 zum Durchführen einer berührungslosen Messung ermöglicht es zum einen, den Inhalt des Behälters vor bzw. benachbart zu der Einrichtung 108 zur Durchführung der berührungslosen Messung zu reduzieren, und zum anderen, eine Messung im Inneren des Wirbels 104 durchzuführen. Falls die Einrichtung 108 zur Durchführung einer berührungslosen Messung z. B. im Bereich einer Behälterwand 122 angeordnet ist, ist es durch die Erzeugung des Wirbels 104 somit möglich, eine nicht-repräsentative Randschicht des Inhalts des Behälters, die sich vor der Einrichtung 108 zur Durchführung einer berührungslosen Messung befinden kann, zu reduzieren bzw. zu entfernen, um eine repräsentative Messung am Inhalt des Behälters durchzuführen.

Ferner kann die Einströmöffnung 114 der Einrichtung 102 zum Erzeugen eines Wirbels 104 ausgebildet sein, um eine Variation der Einströmrichtung 116 bzw. zumindest einer der drei Komponenten der Einströmrichtung 116 zu ermöglichen, um einen Wirbel 104 mit einer vorgegebenen inneren Wirbeltiefe oder Wirbelgröße zu erzeugen. Darüber hinaus kann die Einströmöffnung 114 der Einrichtung 102 zum Erzeugen des Wirbels 104 ausgebildet sein, um eine Strömungsgeschwindigkeit des in den Behälter eingeströmten Mediums 106 zu variieren, um einen Wirbel 104 mit einer vorgegebenen inneren Wirbelgröße oder Wirbeltiefe zu erzeugen. Eine Variation bzw. Veränderung der inneren Wirbelgröße oder Wirbeltiefe ermöglicht es, die Messstelle bzw. die Messposition am Inhalt des Behälters zu variieren oder zu verändern. Dies ermöglicht es nicht nur, eine Eigenschaft des Inhalts des Behälters an einer Stelle bzw. Position zu ermitteln, sondern an mehreren Stellen bzw. Positionen, um eine repräsentative Messung am Inhalt des Behälters durchzuführen.

Die Einrichtung zum Erzeugen eines Wirbels 104 kann, wie in Fig. 1 beispielhaft gezeigt, zwei Einströmöffnungen 114 aufweisen, die symmetrisch um den Messweg 118 angeordnet sein können. Die beiden Einströmöffnungen 114 können dabei derart angeordnet und die Einströmrichtungen 116 derart gewählt werden, dass durch das einströmende Medium eine Kreisströmung mit einem so hohen Geschwindigkeitsgradienten erzeugt wird, dass sich ein Wirbel 104 ausbildet.

Die Vorrichtung 100 zur Durchführung einer berührungslosen Messung am Inhalt eines Behälters kann ferner ein Fenster 120 aufweisen. Das Fenster 120 kann in einem Bereich einer Behälterwand 122 angeordnet sein, wobei die Einrichtung zur Durchführung einer berührungslosen Messung benachbart zu dem Fenster 120 auf einer dem Inhalt des Behälters abgewandten Seite des Fensters 120 angeordnet sein kann. Die Einrichtung 102 zum Erzeugen des Wirbels 104 kann des Weiteren ausgebildet sein, um den Wirbel 104 im Inneren des Behälters mit dem Inneren des Wirbels 104 benachbart zu dem Fenster 120 zu erzeugen. Die Einrichtung 108 zur Durchführung einer berührungslosen Messung kann ferner ausgebildet sein, um die berührungslose Messung durch das Fenster 120 hindurch am Inneren des Wirbels 104 durchzuführen. Das Fenster 120 kann dabei in einem vorgegebenen Bereich des elektromagnetischen Spektrums eine höhere Transparenz bzw. Durchlässigkeit aufweisen als die Behälterwand 122. Darüber hinaus kann das Fenster 120 bezüglich der zumindest einen Einströmöffnung 114 der Einrichtung zum Erzeugen eines Wirbels 104 derart angeordnet sein, dass das einströmende Medium 106 den Inhalt des Behälters benachbart zu dem Fenster 120 reduziert.

Bei Ausführungsbeispielen kann die Einströmöffnungen 114 ferner ausgebildet sein, um die Einströmrichtung 116 während eines Aufbaus des Wirbels 104 bzw. beim Hochfahren der Vorrichtung zur Erzeugung eines Wirbels 104 zu variieren. Beim Hochfahren kann z. B. die erste Komponente der Einströmrichtung 116 (entlang des Messwegs 118) gering gewählt werden, während die zweite und dritte Komponente der Einströmrichtung 116 (lotrecht zum Messweg bzw. senkrecht zur ersten und zweiten Komponente) höher gewählt werden kann, um z. B. zunächst der Inhalt des Behälters benachbart zu dem Fenster 120 zu reduzieren und die Ausbildung einer Kreisströmung zu fördern, bevor z. B. ein Wirbel 104 erzeugt wird, der weiter in Richtung des Behälterinneren bzw. in den Inhalt des Behälters hineinreicht.

Ausführungsbeispiele der vorliegenden Erfindung schaffen eine Vorrichtung 100 zur Durchführung einer Messung am Inhalt eines Behälters, z. B. an einer Flüssigkeit. Die erfindungsgemäße Vorrichtung 100 weist dabei neben einer hohen Zuverlässigkeit, Reproduzierbarkeit und Langzeitstabilität auch eine einstellbare Eindringtiefe in zumindest eine Richtung auf. Dabei werden in den Behälter hineinragende Baugruppen vermieden bzw. die Werte des Hineinragens minimiert. Je nach Anwendung sind bereits Eindringtiefen im Bereich von Millimetern oder Zentimeter hilfreich, um eventuell bestehende Randschichten mit nicht-repräsentativen Eigenschaften zu durchdringen und so wesentlich bessere Messergebnisse sicherzustellen, als dies mit einer Messung ohne Eindringtiefe möglich wäre. Die Variabilität der Messung lässt zudem einen direkten Rückschluss darüber zu, ob eine nicht-repräsentative Randschicht, z. B. aufgrund unzureichender Durchmischung, existiert.

Bei Ausführungsbeispielen kann die erfindungsgemäße Vorrichtung 100 zur Durchführung einer berührungslosen Messung am Inhalt eines Behälters ein Fenster 120 aufweisen, das von einem gezielt einstellbaren Medienstrom bzw. einströmenden Medium 106, beispielsweise einer Gasströmung, derart angeströmt werden kann, dass vor dem Fenster 120 bzw. benachbart zu dem Fenster 120 ein Strömungsverlauf erzeugt wird, der eine eigene Drehrichtung aufweist (Wirbel 104). Innerhalb des Wirbels 104 können sich Teilchen, aufgrund der Drehimpulserhaltung, nicht entlang der Rotationsachse bzw. genau am Ort der Rotationsachse des Wirbels 104 aufhalten, oder in anderen Worten, aufgrund des physikalischen Zusammenhangs der Drehimpulserhaltung ist es Teilchen, die sich bezüglich einer Achse, in diesem Fall vorzugsweise der Messachse 118 entlang der ein Messwert erfasst werden soll, unmöglich, sich genau am Ort der Messmitte aufzuhalten. Hintergrund ist die Tatsache, dass beim Radius r gleich Null (r = 0) der Drehimpuls L, beschrieben durch das Vektorprodukt des Radius r und des Impulses p (L = p x r) bezüglich dieses Radius nicht von Null verschieden sein kann, was wiederum im Widerspruch zur Drehimpulserhaltung steht. Folglich können sich keine Teilchen, deren Impuls von Null verschieden ist, im Zentrum (des Wirbels 104) entlang der Messachse bzw. des Messwegs 118 aufhalten. Erst wenn die eingebrachte Bewegungsenergie durch Reibung an die Umgebung (an den Inhalt des Behälters) übertragen wurde, ist dies möglich, d. h. der entstehende Wirbel 104 hat eine von der eingebrachten Energie und der Reibung abhängige Tiefe (Wirbeltiefe), parallel kann die Ausformung des Wirbels vom ggf. bestehenden Auftrieb des strömenden Mediums im Inhalt des Behälters und von einer möglichen Bewegung des Inhalts des Behälters beeinflusst werden, wodurch eine ausgezeichnete Stelle bzw. Messstelle definiert werden kann, an der die eigentliche Messung stattfindet.

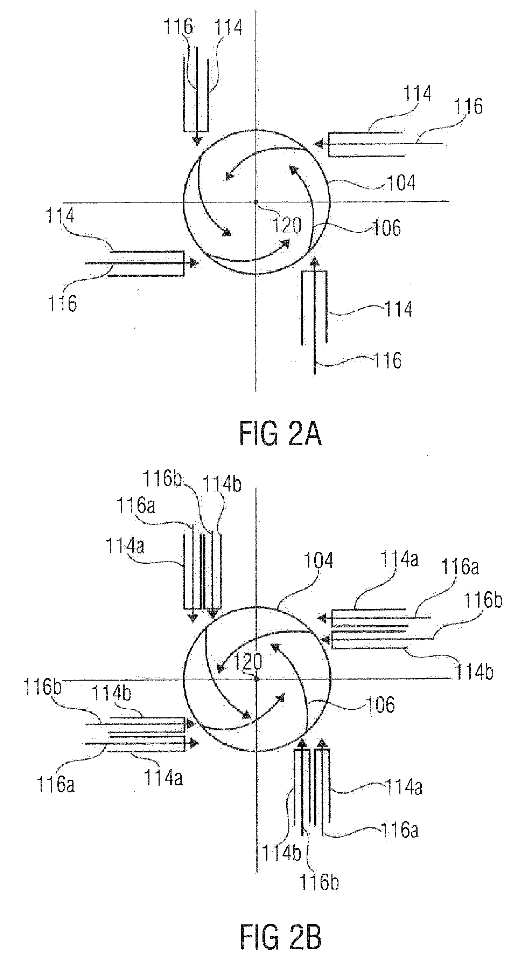

Fig. 2a zeigt eine schematische Ansicht eines Ausführungsbeispiels der Einrichtung 102 zum Erzeugen eines Wirbels 104. Die Einrichtung 102 zum Erzeugen eines Wirbels 104 weist vier Einströmöffnungen 114 zum Einströmen des Mediums 106 in den Behälter auf, die symmetrisch um den Messweg 118 angeordnet sind. Durch die in Fig. 2a gezeigte Anordnung der vier Einströmöffnungen 114 wird das Medium 106 derart in den Behälter eingeströmt, dass eine Kreisströmung mit einem hohen Geschwindigkeitsgradienten entsteht (Wirbel 104). Dabei kann die Einströmrichtung 116 der vier Einströmöffnungen 114 jeweils die erste Komponente (entlang des Messwegs 118) und die zweite Komponente (lotrecht zum Messweg 118) aufweisen, während die dritte Komponente (senkrecht zur ersten und zweiten Komponente) durch die versetzte bzw. nicht auf den Messweg 118 gerichtete Anordnung der Einströmöffnungen 114 realisiert werden kann.

Fig. 2b zeigt eine schematische Ansicht eines weiteren Ausführungsbeispiels der Einrichtung 102 zum Erzeugen eines Wirbels 104. Die Einrichtung 102 zum Erzeugen eines Wirbels 104 weist acht Einströmöffnungen 114 zum Einströmen des Mediums 106 in den Behälter auf. Gezeigt ist dabei eine radiale Matrixanordnung der Düsen bzw. Einströmöffnungen 114. Dabei ist es möglich, dass vier Einströmöffnungen 114a ein Medium in den Behälter mit einer Einströmrichtung 116a einströmen, die hauptsächlich die erste Komponente (entlang des Messwegs 118) aufweist, während die anderen vier Einströmöffnungen 114b ein Medium in den Behälter mit einer Einströmrichtung 116b einströmen, die hauptsächlich die zweite Komponente (lotrecht zum Messweg 118) aufweist. Die dritte Komponente (senkrecht zur ersten und zweiten Komponente) kann dabei durch die versetzte bzw. nicht auf den Messweg 118 gerichtete Anordnung der Einströmöffnungen 114 realisiert werden.

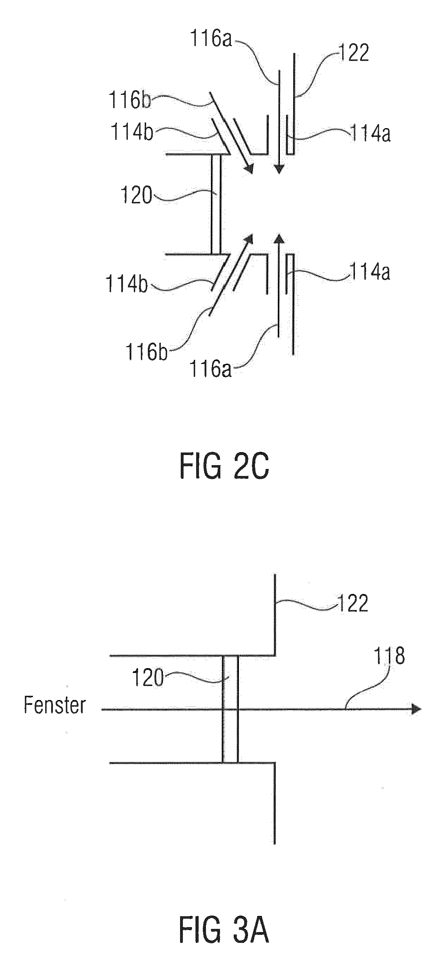

Fig. 2c zeigt eine schematische Ansicht eines weiteren Ausführungsbeispiels der Einrichtung 102 zum Erzeugen eines Wirbels 104. Die Einrichtung 102 zum Erzeugen eines Wirbels 104 weist zumindest vier Einströmöffnungen 114 zum Einströmen des Mediums 106 in den Behälter auf. Gezeigt ist dabei eine axiale Registeranordnung der Düsen bzw. Einströmöffnungen 114. Dabei ist es möglich, dass die zwei Einströmöffnungen 114a bezogen auf den Messweg 118 hauptsächlich eine radiale Komponente des Wirbels 104 erzeugen, während die anderen zwei Einströmöffnungen 114b bezogen auf den Messweg 118 hauptsächlich eine axiale Komponente des Wirbels 104 erzeugen, oder umgekehrt. Die Einströmrichtung 116a der zwei Einströmöffnungen 114a (radial) kann dabei hauptsächlich die zweite Komponente (lotrecht zum Messweg 118) und die dritte Komponente (senkrecht zur zweiten Komponente und zum Messweg 118) aufweisen, während die Einströmrichtung 116b der anderen zwei Einströmöffnungen 114b (axial) hauptsächlich die erste Komponente (entlang des Messwegs 118) und die zweite Komponente (lotrecht zum Messweg 118) aufweisen kann. Durch Einströmen eines Mediums in den Behälter mit den unterschiedlichen Einströmrichtungen 116a und 116b kann dabei der Wirbel 104 erzeugt werden. Alternativ können auch acht Einströmöffnungen analog zu Fig. 2b verwendet werden, um die dritte Komponente des Wirbels 104 zu erzeugen.

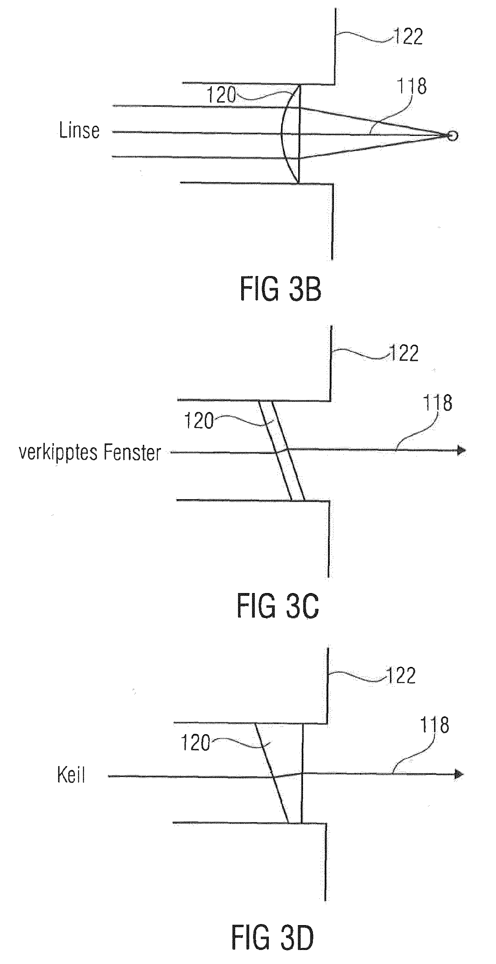

Fig. 3a bis Fig. 3d zeigen in einer schematischen Ansicht Ausführungsbeispiele eines Fensters 120. Das Fenster 120 kann dabei, wie in Fig. 3a gezeigt, eine planparallele Form aufweisen. In Fig. 3b weist das Fenster 120 eine linsenartige Form auf, wodurch es möglich ist, z. B. einen Laserstrahl 110 auf eine Messstelle zu fokussieren oder zu richten. Bei Ausführungsbeispielen kann die Linse darüber hinaus verkippt werden, wodurch es möglich ist, den Messweg 118 und somit auch die Messstelle am Inhalt des Behälters benachbart zu dem Inneren des Wirbels 104 zu variieren, um z. B. eine Repräsentative Messung am Inhalt des Behälters durchführen zu können. In Fig. 3c ist das Fenster 120 verkippt angeordnet, um z. B. Reflexion an der Fensteroberfläche zu vermindern bzw. zu reduzieren. In Fig. 3d weist das Fenster 120 eine keilförmige Bauform auf, wobei eine erste Seite des Fensters 120, die zum Inhalt des Behälters benachbart ist, zur Behälterwand parallel ausgeführt sein kann, während die zweite Seite des Fensters 120 schräg ausgeführt sein kann, um z. B. Reflexion zu vermindern.

Die erfindungsgemäße Vorrichtung 100 zur Durchführung einer berührungslosen Messung kann sowohl bei einem Fenster 120 verwendet werden, das z. B. rechtwinklig zur optischen Achse bzw. Messachse 118 angeordnet ist, als auch bei einer Variante, bei der das Fenster 120 um einen bestimmten Winkel verkippt ist, beispielsweise um Reflexe von der Oberfläche des Fensters 120 zu unterdrücken, Neben einer Ausführung des Fensters 120 als planparallele Platte ist es möglich, Oberflächenvarianten oder Formgestaltungen zu verwenden, die einen Einfluss auf die optischen Eigenschaften des Systems bzw. der Vorrichtung 100 zur Durchführung einer berührungslosen Messung haben.

Bei Ausführungsbeispielen wird zum Erzeugen eines gezielt geformten Wirbels 104 im Messmedium bzw. im Inneren des Behälters die Einströmöffnungen 114 so platziert, dass sie einerseits radiale Anteile außerhalb einer optischen Achse des Fensters 120 bzw. Messachse 118 aufweisen, wodurch gezielt ein Wirbel 104 erreicht werden kann, andererseits sich eine gezielte axiale Medienströmung in das Medium hinein entlang der optischen Achse des Systems bzw. der Messachse 118 erzeugen lässt. Der Volumenstrom bzw. die Einstellung verschiedener Volumenströme in radialer und axialer Richtung ermöglicht eine Einstellung der Größe und Tiefe des Wirbels und damit das Einstellen der Messposition bzw. Messstelle, aus der die Informationen des Mediums ausgekoppelt werden. Darüber hinaus kann somit eine zuverlässige Spülung des Fensters der Vorrichtung 100 zur Durchführung einer berührungslosen Messung realisiert werden. Neben einer Veränderung des Volumenstromes durch eine entsprechende Regelung des Gasflusses ist auch eine Anordnung möglich, bei der eine große Anzahl von Einströmöffnungen 114 verwendet wird, von denen einzelne Düsen bzw. Einströmöffnungen 114 oder bestimmte bzw. vorgegebene Anordnung von Düsen bzw. Einströmöffnungen 114 über Ventile zu- und abgeschaltet werden können. Bei einem bevorzugten Ausführungsbeispiel kann ein Gas, wie z. B. Kohlendioxid, Methan oder ein Gasgemisch, verwendet bzw. eingeströmt werden, das direkt im Prozess entsteht.

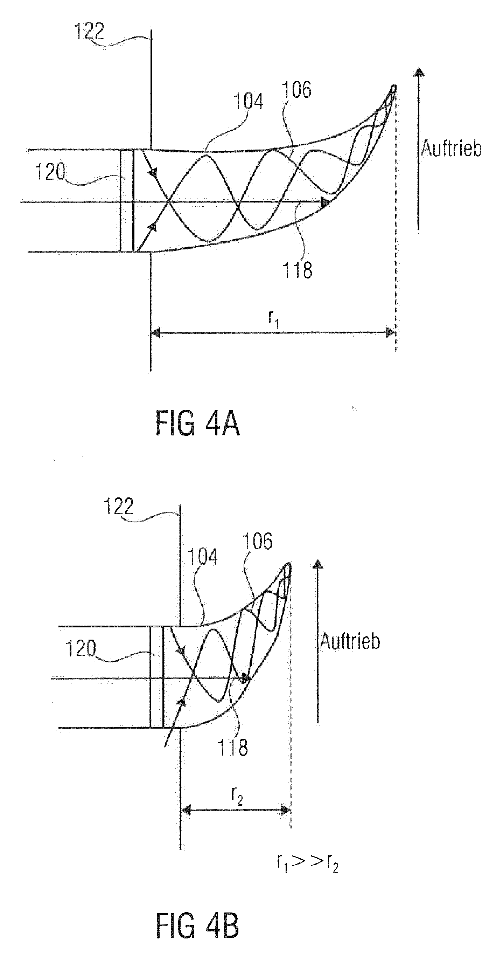

Fig. 4a und 4b zeigen in einer schematischen Ansicht Ausführungsbeispiele des Wirbels 104 bei einem zusätzlichen Auftrieb des Inhalts des Behälters. In Fig. 4a wird das Medium 106 in den Behälter durch die zumindest eine Einströmöffnung 114 mit einer höheren Strömungsgeschwindigkeit eingeströmt, so dass sich ein Wirbel 104 ausbildet, der trotz des Auftriebs des Inhalts des Behälters eine hohe innere Wirbeltiefe r₁aufweist. In Fig. 4b wird das Medium 106 durch die zumindest eine Einströmöffnung 114 mit einer geringeren Strömungsgeschwindigkeit eingeströmt, wodurch sich bei gleichem Auftrieb des Inhalts des Behälters eine deutliche geringere innere Wirbeltiefe r₂ einstellt. Durch Variation der Strömungsgeschwindigkeit kann somit ein Wirbel 104 mit einer vorgegebenen inneren

Wirbelgröße oder Wirbeltiefe erzeugt werden, so dass durch Einstellen der Strömungsgeschwindigkeit die Messstelle bzw. Messposition definiert bzw. vorgegeben werden kann.

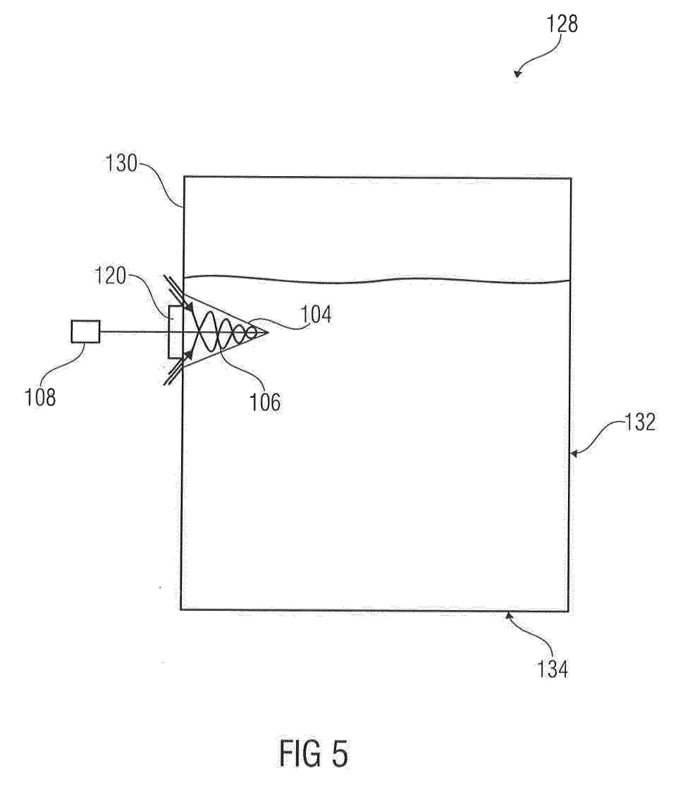

Fig. 5 zeigt eine schematische Ansicht eines Ausführungsbeispiels eines Systems mit einem Behälter 130 und einer Vorrichtung 100 zur Durchführung einer berührungslosen Messung am Inhalt des Behälters 130. Die Vorrichtung 100 zur Durchführung einer berührungslosen Messung kann dabei, wie in Fig. 5 gezeigt, an einer Behälterwand 132 angeordnet sein, wobei die Einrichtung 102 zum Erzeugen des Wirbels 104 ausgebildet sein kann, um einen horizontalen Wirbel 104 zu erzeugen. Alternativ kann die Vorrichtung 100 zur Durchführung einer berührungslosen Messung im Behälterboden 134 angeordnet sein, wobei Einrichtung 102 zum Erzeugen des Wirbels ausgebildet sein kann, um einen vertikalen Wirbel 104 zu erzeugen. Bei Ausführungsbeispielen kann der Behälter 130 in einem oberen Bereich einen gasförmigen Inhalt und in einem unteren Bereich einen flüssigen Inhalt aufweisen, wobei die Vorrichtung 100 zur Durchführung einer berührungslosen Messung ausgebildet sein kann, um den gasförmigen Inhalt aus dem oberen Bereich des Behälters 130 zu entnehmen und um das entnommene Gas in den unteren Bereich über die Einrichtung 102 zum Erzeugen eines Wirbels 104 einzuströmen, um den Wirbel 104 zu erzeugen.

Bei Ausführungsbeispielen kann das in Fig. 5 gezeigte erfindungsgemäße System als ein Gärbehälter zur Erzeugung von Biogas aus Silage und Anteilen von Reststoffen der Tierhaltung, z. B. Dung, Gülle und Jauche, verwendet werden. Die Zusammensetzung des zugeführten Materials hat einen sehr großen Einfluss auf die biologischen Prozesse im Gärtank. Zur gezielten Steuerung, insbesondere zur Optimierung der Gaserzeugung ist eine Überwachung der ablaufenden Prozesse wichtig. Neben der Erfassung indirekter Parameter, wie der Temperatur und des ph-Wertes im Behälter, sind direkt mit dem Prozess korrelierte Parameter wegen des schnellen Ansprechverhaltens von großem Interesse. Dabei können vorzugsweise optische Messverfahren verwendet werden, z. B. Verfahren der Nahinfrarotspektroskopie zur Erfassung der chemischen Zusammensetzung. Ferner kann eine direkte Messung an den beteiligten Mikroorganismen erfolgen, z. B. durch Fluoreszenzspektroskopie.

Im hier beschriebenen Ausführungsbeispiel eines thermophil, d. h. bei 50-60°C oder 40-70°C betriebenen Gärbehälters zur Erzeugung von Biogas aus z. B. Maissilage und Kuhdung, kann die optische Messung aus der Erfassung der Autofluoreszenzmessung an den Methan bildenden Archaen (Mikroorganismen) bestehen, die durch blaues Licht zur Fluoreszenz im Grünen angeregt werden können. Die Höhe des Fluoreszenzsignals korreliert dabei mit der Menge der Methan bildenden Organismen und lässt hierdurch z. B. Rückschlüsse auf den ordnungsgemäßen Betrieb der Biogasanlage zu. Durch die Variation der Gasströmung in der Spülung des optischen Fensters der Messeinrichtung kann die Tiefe des resultierenden Wirbels eingestellt und damit die Position der Messung bzw. die Messstelle definiert werden. Somit ist nicht nur die Erfassung direkt vor dem Fenster, sondern aus einem in den Behälter hineinreichenden Raumbereich möglich. Hierdurch kann erreicht werden, dass ein zuverlässiger Kennwert für einen ausreichend großen Anteil des Inhalts des Gärbehälters erfasst wird. Durch den Gasstrom kann zudem sichergestellt werden, dass das Fenster nicht durch Verunreinigung oder Beschädigungen beeinträchtigt wird. Dies kann insbesondere bei Systemen wichtig sein, deren Inhalt durch einen Rührer oder eine vergleichbare Einrichtung aktiv durchmischt wird. Durch den erfassten Wert der Menge der Mikroorganismen ist es z. B. möglich, die Anlage gezielt zu steuern, beispielsweise die Gesamtmenge oder die Mengenverhältnisse von zugeführter Silage und Kuhdung zu variieren.

Bei Ausführungsbeispielen kann die erfindungsgemäße Vorrichtung 100 zur Durchführung einer berührungslosen Messung am Inhalt eines Behälters zur Feuchtemessung in einem Getreidesilo verwendet werden. Darüber hinaus kann bei Kläranlagen eine Messung des Reinigungsgrades und/oder eine Prozessüberwachung erfolgen. Ferner kann bei der Vermaischung landwirtschaftlicher Erzeugnisse in der Alkoholherstellung, z. B. Bier, Wein und Spirituosen, eine Messung des Alkoholgehalts erfolgen. Des Weiteren kann bei Milch- und Molkereierzeugnissen eine Prozessüberwachung und/oder Zusammensetzungsanalyse von Eiweiß, Fett und Wasser erfolgen. Ferner ist eine Messung in trüben Flüssigkeiten bei Laboranwendungen möglich.

Weitere Ausführungsbeispiele der vorliegenden Erfindung beschreiben ein System zur Durchführung von Messungen mittels elektromagnetischer Strahlung und ein Verfahren zum Betreiben des Systems. Ausführungsbeispiele der Erfindung beschreiben somit ein optisches System und Verfahren zur Durchführung einer berührungslosen Messung am Inhalt eines Behälters,

Ausführungsbeispiele der vorliegenden Erfindung beschreiben ein System zur Durchführung optischer Messungen am Inhalt eines Behälters. Die Messung erfolgt dabei durch eine Einrichtung, die in die Wandung des Behälters eingebracht ist und die zumindest in einem Teilbereich des elektromagnetischen Spektrums eine höhere Transparenz aufweist, als die Wandung des Behälters. Ferner wird diese Einrichtung durch einen Volumenstrom eines Mediums angeströmt, dessen Transparenz in zumindest einem Teilbereich des elektromagnetischen Spektrums höher ist, als die des Inhalts des Behälters. Die Strömung ist dabei derart ausgeführt, dass vor der Einrichtung ein Raumbereich entsteht, in dem eine Drehbewegung vorhanden ist (Wirbel), dessen Ausgestaltung durch Einstellen des Volumenstroms in Ausführung oder Menge beeinflusst werden kann.

Die optische Messung kann dabei eine Messung in Absorption oder Reflexion, z. B. unter Verwendung einer spektroskopischen Auflösung, einer Fluoreszenzmessung, einer Raman-spektroskopie, eine kohärente Antistokes-Raman-Spektroskopie (CARS) oder eine Messung unter Verwendung von mehr als einem Photon sein. Die Einrichtung in der Wandung des Behälters, kann dabei ein planparalleles Fenster, eine Linse, eine Fresnelllinse, eine einseitig plane optische Einrichtung, eine keilförmige Ausführung, ein Kegel, ein Kegelstumpf oder eine andere bezüglich der Medienströmung optimierte Flächenform aufweisen. Die Normale des Fensters kann dabei senkrecht zur inneren Oberfläche des Behälters stehen oder gezielt in einen Winkel dazu ausgeformt sein. Ferner kann ein veränderbares Element der Optik verwendet werden, das eine Beeinflussung des Strahlengangs ermöglicht. Die elektromagnetische Strahlung kann dabei eine Wellenlänge im ultravioletten, sichtbaren oder infraroten Spektralbereich aufweisen.

Bei Ausführungsbeispielen kann ein gasförmiges Medium zum Erzeugen des Volumenstroms verwendet werden, das in eine Flüssigkeit, einem Gemisch aus Festkörpern und Flüssigkeiten oder einem Ensemble einer Mehrzahl von Festkörpern, die zumindest näherungsweise mit den Methoden der Beschreibung einer Flüssigkeit beschrieben werden können, eingeströmt wird. Der erzeugte Wirbel kann dabei durch Einstellen der Medienströmung so beeinflusst werden, dass die optische Messung an unterschiedlichen Stellen im Behälter durchgeführt werden kann. Ferner kann die Medienströmung durch eine Kombination einer Ausrichtung axial in Richtung des Inneren des Behälters und radial durch Anteile, die nicht durch das Zentrum verlaufen, gezielt zur Optimierung des entstehenden Wirbels ausgeformt sein. Des Weiteren kann dabei mehr als eine Einströmöffnung zum Einströmen des Mediums verwendet werden. Dabei kann die Medienströmung durch Steuern mindestens eines Volumenstroms, durch Zu- oder Anschalten einzelner Einströmöffnungen gezielt gesteuert werden, um die Größe oder Form des entstehenden Wirbels zu beeinflussen. Des Weiteren kann eine Anordnung verschieden im Raum ausgerichteter Einströmöffnungen verwendet werden. Darüber hinaus kann die Ausführung des Wirbels unter Berücksichtigung eines Auftriebs einer Substanz gegenüber dem Inhalt des Behälters und unter Berücksichtigung einer Bewegung des Inhalts des Behälters erfolgen. Die Ausrichtung oder Ausformung der Einströmöffnungen kann ferner gezielt verändert werden, um die Medienströmung zu beeinflussen.

Ausführungsbeispiele der vorliegenden Erfindung schaffen eine Vorrichtung 100 zur Durchführung einer berührungslosen Messung an einem Inhalt eines Behälters mit einer Einrichtung 102 zum Erzeugen eines Wirbels 104 und einer Einrichtung 108 zur Durchführung einer berührungslosen Messung. Die Einrichtung 102 zum Erzeugen eines Wirbels 104 ist ausgebildet, um durch Einströmen eines Mediums in den Behälter einen Wirbel 104 in dem Inneren des Behälters zu erzeugen. Die Einrichtung 108 zur Durchführung einer berührungslosen Messung ist ausgebildet, um in einem Inneren des Wirbels 104 eine berührungslose Messung durchzuführen, um eine Eigenschaft des Inhalts des Behälters zu ermitteln.

Bei Ausführungsbeispielen kann die Einrichtung 102 zum Erzeugen eines Wirbels 104 zumindest zwei Einströmöffnungen 114 aufweisen, die symmetrisch um den Messweg angeordnet sind.

Die zumindest zwei Einströmöffnungen 114 der Einrichtung 102 zum Erzeugen eines Wirbels 104 können dabei jeweils zuschaltbar oder abschaltbar sein.

Bei Ausführungsbeispielen kann die Vorrichtung 100 zur Durchführung einer berührungslosen Messung an einem Inhalt eines Behälters ferner ein Fenster 120 aufweisen, das in einem Bereich einer Behälterwand 122 angeordnet sein kann, wobei die Einrichtung 108 zur Durchführung einer berührungslosen Messung benachbart zu dem Fenster 120 auf einer dem Inhalt des Behälters abgewandten Seite des Fensters 120 angeordnet sein kann, und wobei die Einrichtung 102 zum Erzeugen des Wirbels 104 ausgebildet sein kann, um den Wirbel 104 im inneren des Behälters mit dem Inneren des Wirbels 104 benachbart zu dem Fenster 120 zu erzeugen.

Das Fenster 120 kann in einem vorgegeben Bereich des elektromagnetischen Spektrums eine höhere Transparenz aufweisen, als die Behälterwand 122.

Ferner kann das Fenster 120 bezüglich der zumindest einen Einströmöffnung 114 der Einrichtung 102 zum Erzeugen eines Wirbels 104 derart angeordnet sein, das das einströmende Medium 106 den Inhalt des Behälters von einer Gegend benachbart zu dem Fenster 120 zu verdrängt.

Das Fenster 120 kann ein planparalleles Fenster, ein einseitig planares Fenster, ein keilförmiges Fenster, ein kegelförmiges Fenster, eine Linse, eine Fresnellinse, ein diffraktives optisches Element oder ein strahlformendes optisches Element sein.

Weitere Ausführungsbeispiele der vorliegenden Erfindung schaffen ein System 128 mit einem Behälter 130 und einer Vorrichtung 100 zur Durchführung einer berührungslosen Messung an einem Inhalt eines Behälters mit einer Einrichtung 102 zum Erzeugen eines Wirbels 104 und einer Einrichtung 108 zur Durchführung einer berührungslosen Messung. Die Einrichtung 102 zum Erzeugen eines Wirbels 104 ist ausgebildet, um durch Einströmen eines Mediums in den Behälter einen Wirbel 104 in dem Inneren des Behälters zu erzeugen. Die Einrichtung 108 zur Durchführung einer berührungslosen Messung ist ausgebildet, um in einem Inneren des Wirbels 104 eine berührungslose Messung durchzuführen, um eine Eigenschaft des Inhalts des Behälters zu ermitteln.

Bei Ausführungsbeispielen kann der Behälter 130 in einem oberen Bereich einen gasförmigen Inhalt und in einem unteren Bereich einen flüssigen Inhalt aufweisen, wobei die Vorrichtung 100 zur Durchführung einer berührungslosen Messung ausgebildet sein kann, um den gasförmigen Inhalt aus dem oberen Bereich des Behälters zu entnehmen und in den unteren Bereich über die Einrichtung 102 zum Erzeugen eines Wirbels einzuströmen, wobei die Einrichtung 108 zur Durchführung einer berührungslosen Messung ausgebildet sein kann, um eine Eigenschaft des Inhalts des Behälters 130 zu ermitteln.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel umfasst eine programmierbare elektronische Datenverarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die Einzelheiten, die anhand der Beschreibung und der Erläuterung der Ausführungsbeispiele hierin präsentiert wurden, beschränkt sei.

## Patentansprüche

1. Vorrichtung (100) zur Durchführung einer berührungslosen Messung an einem Inhalt eines Behälters, mit folgenden Merkmalen:
einer Einrichtung (102) zum Erzeugen eines Wirbels (104) in dem Inneren des Behälters durch Einströmen eines Mediums (106) in den Behälter; und
einer Einrichtung (108) zur Durchführung einer berührungslosen Messung in einem Inneren des Wirbels (104), um eine Eigenschaft des Inhalts des Behälters zu ermitteln.

2. Vorrichtung (100) nach Anspruch 1, wobei die Einrichtung (108) zur Durchführung einer berührungslosen Messung ausgebildet ist, um eine elektromagnetische Strahlung (110) zu erzeugen und auf das Innere des Wirbels (104) zu richten, und um eine durch das Innere des Wirbels (104) hindurch zurückgeworfene elektromagnetische Strahlung (112) zu erfassen, wobei die erfasste elektromagnetische Strahlung von der Eigenschaft des Inhalts des Behälters abhängig ist.

3. Vorrichtung (100) nach Anspruch 2, wobei die Einrichtung (108) zur Durchführung einer berührungslosen Messung ferner eine Auswerteeinrichtung aufweist, die ausgebildet ist, um die erfasste elektromagnetische Strahlung hinsichtlich der Eigenschaft des Inhalts des Behälters auszuwerten.

4. Vorrichtung (100) nach Anspruch 2 oder 3, wobei die Einrichtung (108) zur Durchführung einer berührungslosen Messung ausgebildet ist, um bei der Erfassung der durch das Innere des Wirbels (104) hindurch zurückgeworfenen elektromagnetischen Strahlung (112), die zurückgeworfene elektromagnetische Strahlung (112) spektral aufgelöst zu erfassen.

5. Vorrichtung (100) nach einem der Ansprüche 1 bis 4, wobei die Einrichtung (108) zur Durchführung einer berührungslosen Messung ausgebildet ist, um eine Reflexions-, Lumineszenz- oder Fluoreszenzmessung durchzuführen.

6. Vorrichtung (100) nach einem der Ansprüche 1 bis 5, wobei die Einrichtung (102) zum Erzeugen eines Wirbels (104) zumindest eine Einströmöffnung (114) zum Einströmen des Mediums (106) in den Behälter entlang einer Einströmrichtung (116) aufweist, wobei die Einströmöffnung (114) zu einem Messweg (120), entlang dem die Einrichtung (108) zur Durchführung einer berührungslosen Messung die Messung durchführt, versetzt angeordnet ist, und die Einströmrichtung (116) eine erste Komponente entlang einer ersten Richtung aufweist, die entlang des Messwegs (120) verläuft eine zweite Komponente entlang einer zweiten Richtung aufweist, die lotrecht zum Messweg (120) verläuft, und eine dritte Komponente entlang einer dritten Richtung aufweist, die senkrecht zu der ersten und zweiten Komponente verläuft, und die erste bis dritte Komponente ungleich Null sind.

7. Vorrichtung (100) nach Anspruch 6, wobei die zumindest eine Einströmöffnung (114) der Einrichtung (102) zum Erzeugen eines Wirbels (104) ausgebildet ist, um einen Wirbel (104) zu erzeugen, dessen Inneres benachbart zu der Einrichtung (108) zur Durchführung einer berührungslosen Messung angeordnet ist.

8. Vorrichtung (100) nach Anspruch 6 oder 7, wobei die Einströmöffnung (114) der Einrichtung (102) zum Erzeugen eines Wirbels (104) ausgebildet ist, um eine Strömungsgeschwindigkeit des in den Behälter eingeströmten Mediums (106) zu variieren, einen Wirbel (104) mit einer vorgegebenen inneren Wirbelgröße oder Wirbeltiefe zu erzeugen.

9. Vorrichtung (100) nach einem der Ansprüche 1 bis 8, wobei die Einrichtung (102) zum Erzeugen eines Wirbels (104) zumindest zwei Einströmöffnungen (114) aufweist, die symmetrisch um den Messweg (120) angeordnet sind.

10. Vorrichtung (100) nach einem der Ansprüche 1 bis 9, wobei die Einrichtung (102) zum Erzeugen eines Wirbels (104) ausgebildet ist, um ein gasförmiges oder flüssiges Medium (106) in den Behälter einzuströmen.

11. Vorrichtung (100) nach einem der Ansprüche 1 bis 10, die ferner ein Fenster (120) aufweist, das in einem Bereich einer Behälterwand (122) angeordnet ist, wobei die Einrichtung (108) zur Durchführung einer berührungslosen Messung benachbart zu dem Fenster (120) auf einer dem Inhalt des Behälters abgewandten Seite des Fensters (120) angeordnet ist, und wobei die Einrichtung (102) zum Erzeugen des Wirbels (104) ausgebildet ist, um den Wirbel (104) im inneren des Behälters mit dem Inneren des Wirbels (104) benachbart zu dem Fenster (120) zu erzeugen.

12. System (128) mit:
einem Behälter (130); und
einer Vorrichtung (100) zur Durchführung einer berührungslosen Messung an einem Inhalt eines Behälters nach einem der Ansprüche 1 bis 11.

13. System (128) nach Anspruch 12, wobei die Vorrichtung (100) zur Durchführung einer berührungslosen Messung an einer Behälterwand (132) oder an einem Behälterboden (134) angeordnet ist, wobei die Einrichtung (102) zum Erzeugen eines Wirbels (104) angeordnet ist, um einen Wirbel (104) horizontal oder vertikal zu erzeugen.

14. Verfahren zur Durchführung einer berührungslosen Messung am Inhalt eines Behälters, mit folgenden Schritten:
Erzeugen eines Wirbels in dem inneren des Behälters durch Einströmen eines Mediums in den Behälter; und
Durchführen einer berührungslosen Messung im inneren des Wirbels, um eine Eigenschaft des Inhalts des Behälters zu ermitteln.

15. Computerprogramm zur Durchführung des Verfahrens gemäß Anspruch 14, wenn das Computerprogramm auf einer programmierbaren elektronischen Datenverarbeitungsmaschine abläuft.
